# EUROPÄISCHE PATENTSCHRIFT

(11) **EP 0 982 384 B1**
(45) Veröffentlichungstag und Bekanntmachung des Hinweises auf die Patenterteilung: **06.10.2004**
(21) Anmeldenummer: 99112601.2
(22) Anmeldetag: 01.07.1999
(51) Int. Cl.: C09J 111/00

(54) **Haftvermittler für Kautschuk oder Gummi auf Substratoberflächen**
Bonding agent for caoutchouc or rubber on substrate surfaces
Agent adhésif pour caoutchouc vulcanisé ou/non sur surfaces de substrates

(30) Priorität: 23.07.1998 DE 19833259
(43) Veröffentlichungstag der Anmeldung: 01.03.2000
(73) Patentinhaber: SGL ACOTEC GmbH, 56427 Siershahn (DE)
(72) Erfinder: Van Dijk, Gijsbert, 31167 Bockenem (DE)
(74) Vertreter: Olgemöller, Luitgard, Dr.

(56) Entgegenhaltungen:
- EP-A- 0 337 224
- EP-A- 0 509 721

## Beschreibung

Die vorliegende Erfindung ist auf eine streichfähige und ggf. spritzfähige Kautschuk-Suspension gerichtet, die sich als Haftvermittler für das Verbinden von Gummi mit verschiedenen Substraten wie Metall oder Gummi eignet, beispielsweise für das Gummieren (Beschichten mit Gummibahnen) von Anlagen und Behältern, und verbesserte Eigenschaften aufweist.

Viele chemische Anlagen oder Vorratsbehälter müssen aus den verschiedensten Gründen mit einer Gummierung versehen werden. Dabei kann es sich beispielsweise um weitergehende Korrosionsschutzmaßnahmen oder um Dichtungsmaßnahmen handeln. Auch ist es für viele industrielle und sonstige Applikationen erforderlich, Gummiwerkstücke oder andere Gummiteile mit einem anderen Teil oder Werkstück zu verbinden, wobei z.B. sogenannte Preßartikel oder Formartikel entstehen. Das GummiMaterial kann jeweils ein organischer Werkstoff auf der Basis von Natur- und Synthesekautschuk sein. Je nach Bedarf müssen Thermoelaste oder Elastomere, Hartund Weichgummis mit einem Substrat, Werkstück oder Untergrund verbunden werden. Letztere können aus Stahl (z.B. Edelstahl) bestehen; es kann jedoch auch Bedarf daran bestehen, andere Metalle oder sonstige Materialien wie glasfaserverstärkte Kunststoffe, Beton, Mauerwerk oder dergleichen mit Gummiwerkstücken oder -teilen zu verbinden oder mit einer Gummierung zu versehen.

Zur Vorbereitung einer Gummierung des Substrates oder Untergrundes wird dieser üblicherweise zuerst chemisch oder mechanisch vorbehandelt, z.B. durch Entfetten und/oder Strahlen von Metallen oder durch Entschlichten von Kunststoffoberflächen. Anschließend wird üblicherweise, je nach Untergrund sofort oder später, eine erste Klebstoffschicht aufgebracht, die üblicherweise als "Primer" bezeichnet wird. Neben dem Effekt, daß hierdurch ggf. die Metalloberfläche vor Korrosion geschützt wird, dient diese Schicht vor allem der Aktivierung der Bindungsfähigkeit des Untergrundes. Meist schließt sich das Aufbringen einer zweiten Haftmittelschicht an, die die Haftungseigenschaften gegenüber dem aufzubringenden Gummi verbessern soll. Dieser zweite Anstrich wird üblicherweise Haftvermittler (Coverzement) genannt. Die genannten Schichten können manchmal gespritzt, müssen häufig jedoch aufgestrichen werden, z.B. wenn die Beschaffenheit der Substratoberfläche ein Aufspritzen nicht zuläßt oder sich wegen der Geometrie der Werkstücke die Spritztechnik verbietet. Das Aufbringen von Anstrichen ist jedoch sehr arbeitsintensiv, so daß die Kosten einen wesentlichen Faktor darstellen.

Anschließend an das Beschichten mit Primer und Haftvermittler werden gewöhnlich eine oder mehrere Klebschichten aufgebracht, worauf - für das Gummieren - die ebenfalls mit einer Klebschicht versehene(n) Kautschukbahn(en) auf den Untergrund aufgelegt werden. Schließlich wird die gesamte Beschichtung bei Bedarf einer Vernetzungsreaktion unterworfen, um eine vulkanisierte Gummierung zu erhalten. Die Vernetzung kann auch durch Selbstvulkanisation erfolgen.

Ähnliches gilt für die Verbindung von Kautschuk auf Substraten in Preßartikeln und sonstigen Werkstücken und Teilen. Auch hier werden das Kautschukteil und das Teil, mit dem der Kautschuk verbunden werden soll, entsprechend vorbehandelt und dann ggf. unter Druck verbunden, wobei der Kautschuk zu Gummi vulkanisiert wird. Auf das Aufbringen weiterer Klebschichten, wie für die Gummierung benötigt, kann hier jedoch häufig verzichtet werden.

Wegen der Unterschiedlichkeit der mit Gummi zu verbindenden Substrate und der aufzubringenden Kautschuke sind die physikalischen Bedingungen, denen ein Haftvermittler genügen muß, recht unterschiedlich. Dementsprechend existiert eine Vielzahl von Haftvermittlern auf dem Markt, die je nach Anforderung auf Basis unterschiedlicher, ggf. modifizierter Kautschuke auf Suspensions- oder Lösungsbasis hergestellt sind.

Die Gummierung von Metallsubstraten mit polaren Kautschuktypen gelingt zwar unter Umständen auch mit nur einem Primer-Anstrich. Ähnliches gilt für Preßartikel. Allerdings sind die erhaltenen Gummierungen/Gummiverbindungen nicht ausreichend gegenüber sehr harten Umweltbedingungen (Temperatur- und Umwelteinflüssen wie Korrosion oder Anwesenheit von Ölen, Lösungsmitteln, Säuren oder Basen) stabil. Bei der Verwendung von Sattdampf kommt es zu Korrosionserscheinungen, da der Haftvermittler hydrolytisch angegriffen wird.

Aufgabe der vorliegenden Erfindung ist es, einen streichfähigen und ggf. spritzfähigen Haftvermittler für das Erzeugen einer stabilen Verbindung unterschiedlicher Substrate mit Kautschuk bzw. Gummi zur Verfügung zu stellen, der ausgezeichnete Haftungseigenschaften zwischen den jeweils zu verbindenden Oberflächen verleiht, unabhängig davon, ob es sich bei dem Kautschuk um einen polaren oder unpolaren Kautschuktyp handelt, so daß in der voranstehend beschriebenen Abfolge der Behandlung des Untergrundes vor einer Gummierung auf das zweimalige Einstreichen/Aufspritzen mit Primer und Haftvermittler verzichtet werden kann und ein einmaliger Anstrich genügt. Insbesondere soll der Haftvermittler eine ausgezeichnete Temperaturbeständigkeit der Haftbrücke gewährleisten, so daß die Haftung vorzugsweise auch bei Temperaturen von 140 - 150°C zufriedenstellend bleibt.

Diese Aufgabe wird überraschenderweise durch die Bereitstellung eines Haftvermittlers gemäß Anspruch 1 gelöst.

Erfindungsgemäß wird als Hauptkomponente chlorierter Kautschuk eingesetzt. Chlorierter Kautschuk besitzt im allgemeinen einen Chlorgehalt von >50%, z.B. 65 - 68%. Chlorierter Kautschuk als solcher besitzt ausgezeichnete Resistenz gegenüber Chemikalien. Chlorierte Kautschuke, z.B. Chlorbutadien-Elastomer, finden daher z.B. als Klebstoffe Verwendung. Allerdings erweichen sie bei höheren Temperaturen.

Erfindungsgemäß wird der chlorierte Kautschuk im Verschnitt mit 10 - 50 Gew.-Teilen, bezogen auf 100 Teile der Gesamtkautschukmenge, an nichthalogeniertem Kautschuk eingesetzt.

Unter "nichthalogeniertem Kautschuk" sind dabei alle (noch nicht vulkanisierten) (Roh-) Kautschuke wie Natur- und Synthesekautschuke zu verstehen, sofern sie im wesentlichen bzw. völlig halogenfrei sind. Synthesekautschuke können Homo- oder Heteropolymerisate sein. Als Beispiele seien genannt: Naturkautschuk (Naturgummi, NR), Styrol-Butadienkautschuk (SBR), cis-1,4-Polyisopren (IR), Isopren/Isobutylen-Elastomer (IIR), Butadien-Elastomer (BR), Acrylnitril-Butadien-Elastomer (NBR, Nitrilkautschuk), Ethylen-/Propylen-/Dien-Thermoplastelastomer (EPT), Ethylen-/Butadien-/Dien-Elastomer (EPDM). Die aufgeführte Liste ist jedoch nur beispielhaft zu verstehen.

In bevorzugter Weise werden auf 100 Teile Kautschuk etwa 70 bis 85 Gewichtsteile chlorierter Kautschuk und etwa 15 bis 30 Gewichtsteile nichthalogenierter Kautschuk eingesetzt; ganz besonders bevorzugt sind etwa 80 Gewichtsteile chloriert. NR- und IR-Kautschuke sind die bevorzugten Begleiter des chlorierten Kautschuks im Verschnitt.

Um eine Bromierung in Allylstellung zu bewirken, werden bevorzugt Bromierungsmittel wie N-Brom-succinimid (siehe Formel I) oder Dibrom-dimethylhydantoin (siehe Formel II) eingesetzt.

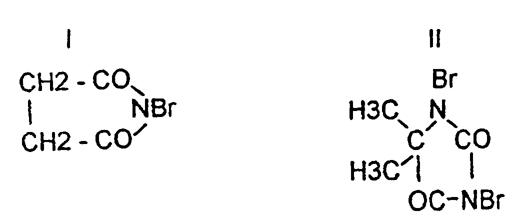

Diese Substanzen liefern konstante, geringe Konzentrationen an Brom, wodurch die Bromierung in Allylstellung favorisiert wird.

Bevorzugt wird die Bromverbindung in einer Menge von etwa 5 bis etwa 10 Gewichtsteilen, bezogen auf die Gesamt-Kautschukmenge, eingesetzt. Dabei ist natürlich zu berücksichtigen, daß das Molekulargewicht von (I) etwas geringer ist als das von (II). Werden weniger als etwa 5 Gewichtsteile eingesetzt, beobachtet man eine weniger gute Verbesserung der Haftungseigenschaften, während ein Einsatz von deutlich über 10 Gewichtsteilen keine weitere Verbesserung mehr bewirkt. Besonders bevorzugt ist es, etwa 7,5 Gewichtsteile auf 100 Teile Kautschuk zu verwenden.

Obwohl es auch möglich ist, die Bromierung auf Knetwalzen durch Einarbeiten der Substanzen in den Kautschuk zu bewirken, ist es doch bevorzugt, ihn in gequollener Form in einem Lösungsmittel der Bromierung zu unterwerfen. Vorzugsweise wird ein unpolares, inertes Lösungsmittel wie z.B. Xylol oder Toluol oder ähnliches, auch in Mischungen, eingesetzt. Xylol hat sich dabei als sehr geeignet erwiesen. Die Menge des Lösungsmittels ist nicht kritisch; beispielsweise kann die Bromierung in einer Menge von 1 bis 40, bevorzugt 2 bis 8 Gewichtsteilen Lösungsmittel auf einen Teil Gesamt-Kautschuk erfolgen.

Der Kautschuk wird durch die erfindungsgemäße Herstellung zu etwa 3 bis etwa 25 %, bevorzugt etwa 5 bis etwa 20 % bromiert. Durch diese Bromierung entstehen weitere reaktive Zentren im Kautschuk, die eine verstärkte und gegenüber einer größeren Zahl von Substraten und Gummierungen wirksame Vernetzung ermöglichen, und zwar sowohl über eine Halogenabspaltung als auch über eine Vernetzung der Doppelbindung. Kautschuke, die über Schwefelbrücken durch Anlagerung an die Doppelbindung reagieren können, reagieren mit den noch bestehenden ungesättigten Isopren- oder Butadiengruppen. Nur wenn diese nicht zur Verfügung stehen, erfolgt eine Reaktion über das eingeführte Brom. Die ausgebildeten Brückenbindungen zum Substrat, zur Gummierung und im Haftvermittler selbst sind thermisch stabil. Dies bewirkt eine verbesserte Haftung der Gummierung auf dem Substrat.

Der Haftvermittler kann weitere Füllstoffe enthalten. Diese können in die Reaktionsmischung mit hineingegeben werden. Geeignet sind beispielsweise Kieselsäure (z.B. in einer Menge bis zu 50 Gewichtsteilen auf 100 Gewichtsteile Kautschuk) oder Ruß (z.B. in einer Menge von bis zu 10, ggf. bis zu 100 Gewichtsteilen auf 100 Gewichtsteile Gesamt-Kautschuk). In manchen Fällen können weitere Zusätze vorgesehen sein. So kann ggf. ein Zusatz von Metallpulver oder Metalloxidpulver (z.B. Zink oder Zinkoxid) vorteilhaft sein, wenn Gummi mit einem Buntmetall oder Edelstahl verbunden werden soll.

In vorteilhafter Weise können weitere Reaktionsmodifizierer wie Vernetzer oder Beschleuniger oder andere übliche Hilfsmittel zugesetzt werden, die dem Fachmann bekannt sind. Wird die Bromierung bei etwas erhöhten Temperaturen (z.B. 50-55°C) durchgeführt, ist die Reaktion in Abhängigkeit von den eingesetzten Elastomeren meist in einem Zeitraum von 30 min bis 4 Stunden im wesentlichen abgeschlossen. Die Suspension ist sodann einsatzfähig. Sie läßt sich beispielsweise durch Streichen oder Spritzen auf die zu verbindenden Flächen aufbringen.

Überraschenderweise hat sich herausgestellt, daß bei Verwendung der erfindungsgemäßen Haftvermittler der Korrosionsschutz gegenüber Feuchtigkeit oder unterwandernde aggressive Medien besonders gut ist.

### Beispiel:

Im Beispiel sind die genannten Teile Gewichtsteile.

80 Teile chlorierter Kautschuk mit einem Chlorgehalt von etwa 70% und 20 Teile IR werden grob zerkleinert und mit 10 Teilen Kieselsäure, 7.5 Teilen N-Brom-Succinimid und 10 Teilen Ruß in ca. 600 Teilen Xylol suspendiert und bei 55 - 60°C etwa 2 Stunden lang in einem Dispersionsrührer gerührt. Man erhält eine Suspension, die streichfähig und spritzfähig ist. Je nach Bedarf kann diese ggf. auch verdünnt oder eingeengt werden.

Die erhaltene Mischung wurde auf ein Metallsubstrat (C-Stahl) aufgestrichen; anschließend wurde wie oben beschrieben eine Gummierung mit unterschiedlichem Hartgummi oder Weichgummi durchgeführt bzw. ein entsprechendes Gummiwerkstück auf das Substrat aufgebracht. Die Ergebnisse sind in der Tabelle aufgelistet, wobei der jeweils verwendete Kautschuk in der Spalte "Polymerbasis" angegeben ist. Der Verbund wurde bei unterschiedlichen Bedingungen vulkanisiert, nämlich im Autoklaven (mit Sattdampf oder Heißluft), in der Presse oder drucklos. Die Temperaturen wurden dabei stark variiert, um zu testen, in welchen Temperaturbereichen die Haftvermittler einsetzbar sind. Die Haftfestigkeit für Weichgummi wurde nach DIN 53531 ähnlich Teil 1, ASTM D 429 Methode E bestimmt, die für Hartgummi nach DIN EN 24624. Die Ergebnisse sind in der nachstehenden Tabelle zusammengefaßt.

Aus der Tabelle läßt sich erkennen, daß die Haftvermittler sowohl bei sehr hohen Temperaturen von bis zu 148°C und unter Druck als auch drucklos und bei 40°C (dann allerdings über längere Zeiträume hinweg) vulkanisiert werden können und dabei ausgezeichnete Haftungseigenschaften zeigen. Einerseits erhält man trotz Sattdampf bei 140 - 150°C sehr gute Werte, andererseits auch bei Umgebungsdruck und fast Umgebungstemperatur. Damit eignen sich die Haftvermittler auch z.B. zur Anwendung auf Baustellen und dergleichen. Ferner wurde festgestellt, daß der Korrosionsschutz bei Einsatz der erfindungsgemäßen Haftvermittler gegenüber den bekannten Haftvermittlern verbessert ist.

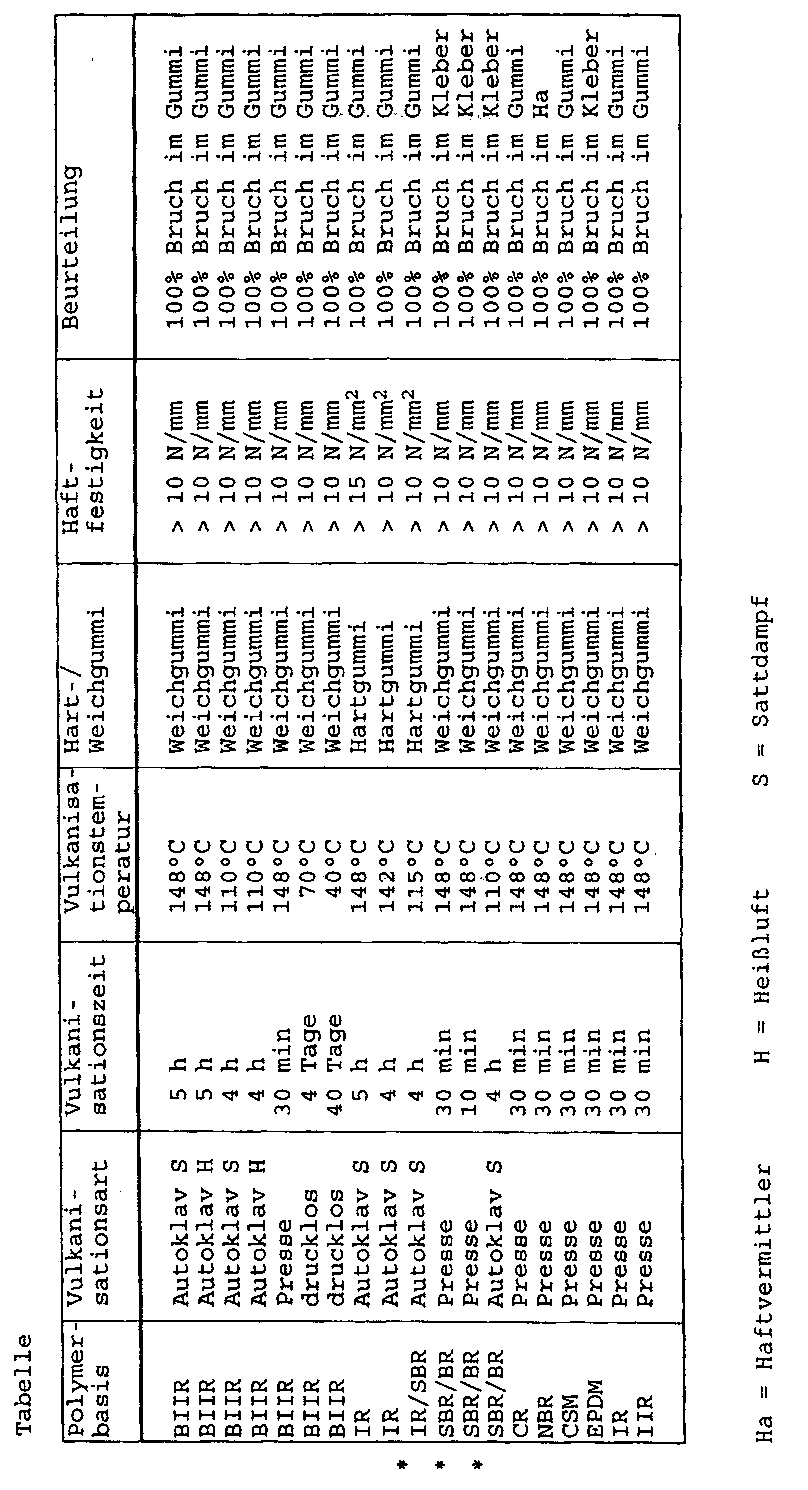

## Patentansprüche

1. Streichfähiger Haftvermittler für das Verbinden von Kautschuk oder Gummi mit Substratoberflächen, erhältlich durch die Umsetzung von
(a) 50 - 90 Gew.-Teilen chloriertem Kautschuk und
(b) 10 - 50 Gew.-Teilen nichthalogeniertem Kautschuk, wobei die Menge an Kautschuk gemäß (a) und (b) zusammen 100 Gew.-Teile beträgt, mit
(c) 3 bis 20 Teilen einer organischen Bromverbindung, die den Kautschuk vorwiegend in Allylstellung bromieren kann, in Gegenwart von
(d) 0-50 Teilen Kieselsäure,
(e) 0-100 Teilen Ruß
in einem Lösungs- bzw. Suspensionsmittel.

2. Streichfähiger Haftvermittler nach Anspruch 1, worin
(c) 5 bis 10 Teile der organischen Bromverbindung eingesetzt werden.

3. Streichfähiger Haftvermittler nach Anspruch 1, erhältlich durch die Umsetzung von
(a) 80 Gew.-Teilen chloriertem Kautschuk
(b) 20 Gew.-Teilen nichthalogeniertem Kautschuk mit
(c) etwa 7,5 Gew.-Teilen der Bromverbindung
in Gegenwart von
- etwa 10 Teilen Kieselsäure,
- etwa 10 Teilen Ruß
in etwa 400 bis 600 Teilen eines Lösungs- bzw. Suspensionsmittels.

4. Streichfähiger Haftvermittler nach einem der voranstehenden Ansprüche, worin die organische Bromverbindung ausgewählt ist unter N-Bromsuccinimid, Dibrom-dimethylhydantoin und Mischungen hiervon.

5. Streichfähiger Haftvermittler nach einem der voranstehenden Ansprüche, erhältlich durch die Umsetzung der Komponenten (a) - (e) wie im Anspruch 1 oder 3 definiert sowie zusätzlich von Metallpulver.

6. Verfahren zum Gummieren von Substratoberflächen, **dadurch gekennzeichnet, daß** die Substratoberfläche ohne Grundierung mit einem Haftvermittler gemäß einem der Ansprüche 1 bis 5 bestrichen und sodann mit einer oder mehreren Klebschichten versehen wird und schließlich der ggf. ebenfalls mit einer Klebschicht bestrichene Kautschuk bahnförmig aufgebracht wird, worauf der entstandene Verbund ggf. vulkanisiert wird.

7. Verfahren zum Verbinden von Gummiteilen mit Substratoberflächen, **dadurch gekennzeichnet, daß** die Substratoberfläche ohne Grundierung mit einem Haftvermittler gemäß einem der Ansprüche 1 bis 5 bestrichen und sodann mit einer oder mehreren Klebschichten versehen wird und schließlich das ggf. ebenfalls mit einer Klebschicht bestrichene Kautschukteil aufgebracht wird, worauf der entstandene Verbund vulkanisiert wird.

## Claims

1. Spreadable adhesion promoter for bonding rubber or vulcanised rubber to substrate surfaces, which can be obtained by the reaction of
(a) 50 - 90 parts by weight of chlorinated rubber and
(b) 10 - 50 parts by weight of non-halogenated rubber, wherein the quantity of rubber according to (a) and (b) together is 100 parts by weight, with
(c) 3 to 20 parts of an organic bromine compound which may brominate the rubber predominantly in allyl position, in the presence of
(d) 0 - 50 parts of silica,
(e) 0 - 100 parts of carbon black
in a solvent or suspending agent.

2. Spreadable adhesion promoter according to claim 1, wherein
(c) 5 to 10 parts of the organic bromine compound are used.

3. Spreadable adhesion promoter according to claim 1, which can be obtained by the reaction of
(a) 80 parts by weight of chlorinated rubber
(b) 20 parts by weight of non-halogenated rubber with
(c) about 7.5 parts by weight of the bromine compound
in the presence of
- about 10 parts of silica,
- about 10 parts of carbon black
in about 400 to 600 parts of a solvent or suspending agent.

4. Spreadable adhesion promoter according to one of the preceding claims, wherein the organic bromine compound is selected from N-bromosuccinimide, dibromo-dimethyl hydantoin and mixtures thereof.

5. Spreadable adhesion promoter according to one of the preceding claims, which can be obtained by the reaction of components (a) - (e) as defined in claim 1 or 3 and additionally of metal powder.

6. Process for gumming substrate surfaces, **characterised in that** the substrate surface without primer is coated with an adhesion promoter according to one of claims 1 to 5 and then provided with one or more adhesive layers and finally, the rubber optionally likewise coated with an adhesive layer is applied in strips, whereupon the resulting bond is optionally vulcanised.

7. Process for bonding vulcanised rubber parts with substrate surfaces, **characterised in that** the substrate surface without primer is coated with an adhesion promoter according to one of claims 1 to 5 and then provided with one or more adhesive layers and finally, the rubber part optionally likewise coated with an adhesive layer is applied, whereupon the resulting bond is vulcanised.

## Revendications

1. Adhésif applicable par enduction pour la liaison d'un caoutchouc à des surfaces de substrats, pouvant être obtenu par la réaction de
(a) 50 à 90 parties en poids de caoutchouc chloré et
(b) 10 à 50 parties en poids de caoutchouc non halogéné, la quantité de caoutchouc selon (a) et (b) totalisant 100 parties en poids, avec
(c) 3 à 20 parties d'un composé organique bromé, qui peut bromer le caoutchouc principalement dans la position allyle, en présence
(d) de 0 à 50 parties d'acide silicique
(e) de 0 à 100 parties de noir de fumée,
dans un solvant ou un agent de mise en suspension.

2. Adhésif applicable par enduction suivant la revendication 1, dans lequel
(c) 5 à 10 parties du composé organique bromé sont utilisées.

3. Adhésif applicable par enduction suivant la revendication 1, pouvant être obtenu par réaction de
(a) 80 parties en poids de caoutchouc chloré,
(b) 20 parties en poids de caoutchouc non halogéné, avec
(c) environ 7,5 parties en poids du composé bromé, en présence de
- environ 10 parties d'acide silicique,
- environ 10 parties de noir de fumée,
dans environ 400 à 600 parties d'un solvant ou agent de mise en suspension.

4. Adhésif applicable par enduction suivant l'une des revendications précédentes, dans lequel le composé organique bromé est choisi entre le N-bromosuccinimide, la dibromodiméthylhydantoïne et des mélanges de ces composés.

5. Adhésif applicable par enduction suivant l'une des revendications précédentes, pouvant être obtenu par la réaction des composants (a) - (e) comme définie dans la revendication 1 ou 3, de même que, en outre, d'un métal en poudre.

6. Procédé de gommage de surfaces de substrats, **caractérisé en ce que** la surface d'un substrat est enduite, sans apprêt, d'un adhésif suivant l'une des revendications 1 à 5, puis pourvue d'une ou plusieurs couches de colle et, finalement, le caoutchouc éventuellement enduit lui aussi d'une couche de colle est appliqué sous forme de bande, après quoi le composite produit est éventuellement vulcanisé.

7. Procédé de liaison d'éléments en caoutchouc avec des surfaces de substrats, **caractérisé en ce que** la surface d'un substrat est enduite, sans apprêt, d'un adhésif suivant l'une des revendications 1 à 5 puis pourvue d'une ou de plusieurs couches de colle et, finalement, l'élément en caoutchouc éventuellement enduit lui aussi d'une couche de colle est mis en place, après quoi le composite produit est vulcanisé.
